# EUROPEAN PATENT SPECIFICATION

(11) **EP 2 623 404 B1**
(45) Date of publication and mention of the grant of the patent: **06.11.2019**
(21) Application number: 11829071.7
(22) Date of filing: 27.09.2011
(51) Int. Cl.: B62J 9/00, B62M 7/12, B62K 11/10

(54) **ELECTRIC TWO-WHEELED VEHICLE**
ELEKTRISCHES ZWEIRÄDRIGES FAHRZEUG
VÉHICULE ÉLECTRIQUE À DEUX ROUES

(30) Priority: 30.09.2010 JP 2010222209
(43) Date of publication of application: 07.08.2013
(73) Proprietor: Suzuki Motor Corporation, Shizuoka 432-8611 (JP)
(72) Inventor: IIDA, Kazuhiro, Hamamatsu-shi Shizuoka 432-8611 (JP); HAKAMATA, Osamu, Hamamatsu-shi Shizuoka 432-8611 (JP)
(74) Representative: Viering, Jentschura & Partner mbB Patent- und Rechtsanwälte
(86) International application number: PCT/JP2011/071967
(87) International publication number: WO 2012/043518

(56) References cited:
- EP-A1- 1 767 448
- EP-A2- 0 741 060
- EP-A2- 1 738 947
- WO-A1-2004/078567
- WO-A1-2010/109969
- CN-Y- 201 376 623
- JP-A- 2007 083 953
- US-A- 6 037 726
- US-A1- 2007 023 216

## Description

### TECHNICAL FIELD

The present invention relates to an electric two-wheeled vehicle including electric components such as a battery and so on below a seating seat.

### BACKGROUND ART

In a scooter-type electric two-wheeled vehicle, an electric two-wheeled vehicle using an electric motor as a drive source and having a battery of a type fixed to or a type detachable from a vehicle body is realized. In an electric two-wheeled vehicle described, for example, in Patent Document 1, an electric motor (26) that drives a driving wheel is mounted on a rear arm that supports the driving wheel to form a power unit, a battery (32) (battery pack) that stores electric power to be supplied to the electric motor (26) of the power unit is mounted on the vehicle body below the seat, and a central processing unit (39) (EV controller) that outputs a control signal on the basis of an operation amount of an accelerator operation part (30) and a power control part (42) (inverter) that increases and decreases an amount of electric power to be supplied from the battery (32) to the electric motor (26) on the basis of the control signal of the central processing unit (39) are formed into an integral control device (35) and mounted near the electric motor (26) of the rear arm.

The central processing unit (39) and the power control part (42) constituting the control device (35) are formed by electronic circuits, and an impact due to road surface vibration and a temperature rise due to generation of heat by themselves can cause a decrease in durability and performance.

Document EP 1 738 947 A2 shows the preamble of claim 1.

### CITATION LIST

### PATENT LITERATURE

Patent Literature 1: Japanese Laid-open Patent Publication No. 2004-015853

### SUMMARY OF INVENTION

### TECHNICAL PROBLEM

However, the structure in which the central processing unit (39) and the power control part (42) are integrally formed and arranged inside the rear arm as in the control device (35) described in Patent Document 1 needs to be enhanced in shockproof property because the structure receives vibration directly from the road surface. Further, the power control part (42) itself generates heat to high temperature because it controls large electric power and thus needs to be enhanced in heat resistance because the central processing unit (39) integrally formed therewith also receives influence. Note that methods of enhancing the shockproof property include, for example, a method of supporting the structure in a floating manner by an elastic material, a method of resin-molding and so on.

In consideration of the above circumstances, an object of the present invention is to provide an electric two-wheeled vehicle which can improve and maintain the performance such as durability and arrangement property of electrical components and realize reduction in cost.

### SOLUTION TO PROBLEM

An electric two-wheeled vehicle of the present invention is an electric two-wheeled vehicle including: an electric motor that drives a driving wheel; a battery that supplies electric power to the electric motor; and a drive control device composed of an EV controller part that outputs a control signal on the basis of an operation amount of an accelerator device and an inverter part that increases and decreases an amount of electric power to be supplied to the electric motor on the basis of the control signal of the EV controller part, wherein the EV controller part and the inverter part of the drive control device are formed in a divided manner, and wherein a vehicle body below a seating seat is covered with a body cover, a storage box integrally molded of a synthetic resin that has an upper opening to be freely opened and closed by the seating seat is arranged below the seating seat, and the EV controller part is attached and supported on an outer periphery of a side wall of the storage box.

Further, in the electric two-wheeled vehicle of the present invention, the EV controller part integrally has a connection terminal with the battery, the connection terminal being provided on a wall surface of a casing thereof and facing an accommodation part of the storage box, and the battery and the EV controller part are directly connected to each other.

Further, the electric two-wheeled vehicle of the present invention further includes: a low step board made by curving downward a vehicle body in front of the seating seat, wherein a room covered with a front end portion of the seating seat formed to get narrower toward the front in a plan view of the vehicle and the body cover below the seating seat is formed to get narrower toward the front in the plan view of the vehicle, and the EV controller part is arranged on a front side of the storage box in the room formed to get narrower toward the front.

Further, in the electric two-wheeled vehicle of the present invention, the inverter part is arranged below the low step board.

### ADVANTAGEOUS EFFECTS OF INVENTION

According to the present invention, high vibration proof effect can be provided for the EV controller that is attached and supported on the storage box made of a synthetic resin, and appropriate and safe driving is ensured. Further, the battery and the EV controller are directly connected to each other to eliminate the necessity of use of high-voltage conductor and so on, thereby effectively reducing cost. Furthermore, the room below the seating seat that is long in a front and rear direction can be efficiently used to store the electrical components with high space efficiency.

### BRIEF DESCRIPTION OF DRAWINGS

[Fig. 1] Fig. 1 is a side view illustrating the whole structure of an electric two-wheeled vehicle according to the present invention.
[Fig. 2] Fig. 2 is a plan view illustrating a state that a seating seat in the electric two-wheeled vehicle in an embodiment of the present invention is detached.
[Fig. 3] Fig. 3 is a plan view illustrating a state that the seating seat and a storage box in the electric two-wheeled vehicle in the embodiment of the present invention are detached.
[Fig. 4] Fig. 4 is an upper perspective view of the storage box according to the present invention.
[Fig. 5] Fig. 5 is a lower perspective view of the storage box according to the present invention.
[Fig. 6] Fig. 6 is a lower perspective view of a battery according to the present invention.
[Fig. 7] Fig. 7 is a lower perspective view of an EV controller according to the present invention.
[Fig. 8] Fig. 8 is a view of an arrow A in Fig. 1.
[Fig. 9A] Fig. 9A is a plan view illustrating an arrangement modified example of electrical components of the electric two-wheeled vehicle according to the present invention.
[Fig. 9B] Fig. 9B is a sectional view along a line I-I in Fig. 9A.

### DESCRIPTION OF EMBODIMENTS

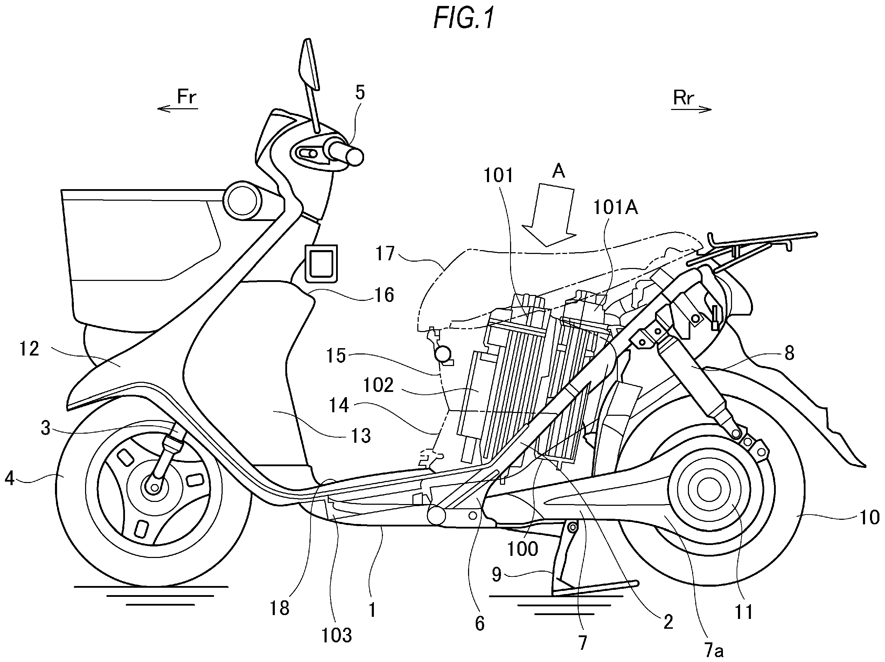

Hereinafter, a preferred embodiment in an electric two-wheeled vehicle according to the present invention will be described based on the drawings. Fig. 1 is a side view of a scooter type electric two-wheeled vehicle according to this embodiment. First, the whole structure of the two-wheeled vehicle will be described using Fig. 1. Note that in the drawings including Fig. 1 used in the following description, as necessary, the front of a vehicle is indicated by an arrow Fr and the rear of the vehicle is indicated by an arrow Rr, respectively, and a lateral right side of the vehicle is indicated by an arrow R, and a lateral left side of the vehicle is indicated by an arrow L, respectively.

As illustrated in Fig. 1, a vehicle body frame of the electric two-wheeled vehicle is configured to include a not-illustrated head pipe, a down tube 1 extending downward from the head pipe and substantially horizontally extending to the rear from the middle thereof, and right and left rear frames 2 extending to the upper rear from the rear end portion of the down tube 1. In addition, though not illustrated, right and left auxiliary frames extend horizontally or slightly upward to the rear from the lower portion of the down tube 1 and coupled to the rear frames 2 respectively.

Two right and left front forks 3 are supported to be turnable right and left by means of the not-illustrated head pipe. A front wheel 4 is rotatably supported on lower portions of the front forks 3, and the front wheel 4 is steered right and left by a handle bar 5.

To brackets 6 provided at lower portions of the right and left rear frames 2, a front end of a swing arm 7 is held in a vertically swingable manner via a pivot shaft. The swing arm 7 is a swing arm of a cantilever type having an arm part 7a extending to the rear only on the left side of the vehicle, and a rear suspension 8 is laid between a rear end portion of the arm part 7a and the rear frames 2. Further, a stand 9 is attached to the middle of the arm part 7a.

A rear wheel 10 being a driving wheel and a power unit 11 including an electric motor driving the rear wheel 10 are supported at a rear end portion of the arm part 7a of the swing arm 7, so that the rotation of an output shaft of the electric motor is transmitted to the rear wheel 10 via a speed reducer.

The vehicle body frame is covered with a vehicle body cover made of resin to form an external appearance of the vehicle. The vehicle body cover is composed by combining a front leg shield 12 as a leg shield, a rear leg shield 13, a lower cover 14, a rear frame cover 15 and so on. The front leg shield 12 is arranged to cover a front portion of the vehicle body and also constitutes a front fender. The rear leg shield 13 is arranged to constitute a rear surface of the front leg shield 12 and forms a pocket part 16 for storage. The lower cover 14 is provided continuously to the front leg shield 12 and the rear leg shield 13, and arranged to cover the right and left auxiliary frames to the lowermost of a seating seat 17 to constitute a footrest part 18 on which a rider put his or her feet. The rear frame cover 15 is arranged to cover the rear frames 2 below the seating seat 17.

Below the seating seat 17 and between the pair of right and left rear frames 2, a storage box 100 is disposed as a storage part for electrical components including a later-described battery and so on. The seating seat 17 is supported to be vertically pivotable around a hinge mechanism at a front portion thereof and to be capable of opening and closing, and also serves as a lid of the storage box 100. The storage box 100 is arranged below the seating seat 17 configured to be capable of opening and closing, thereby enabling a work of attaching and detaching the electrical components stored therein to be easily performed.

This embodiment includes, as main electrical components, a battery 101 and a spare battery 101A that supply electric power to the electric motor of the above-described power unit 11, and a drive control device composed of an EV controller 102 that outputs a control signal on the basis of an operation amount of an accelerator device and an inverter 103 that increases and decreases an amount of electric power to be supplied to the electric motor on the basis of the control signal of the EV controller 102. Note that in this example, the electrical component to be stored in the storage box 100 is typically the battery 101 because the battery 101 is comparatively frequently attached and detached for charge or the like, but other electrical components may be stored as necessary.

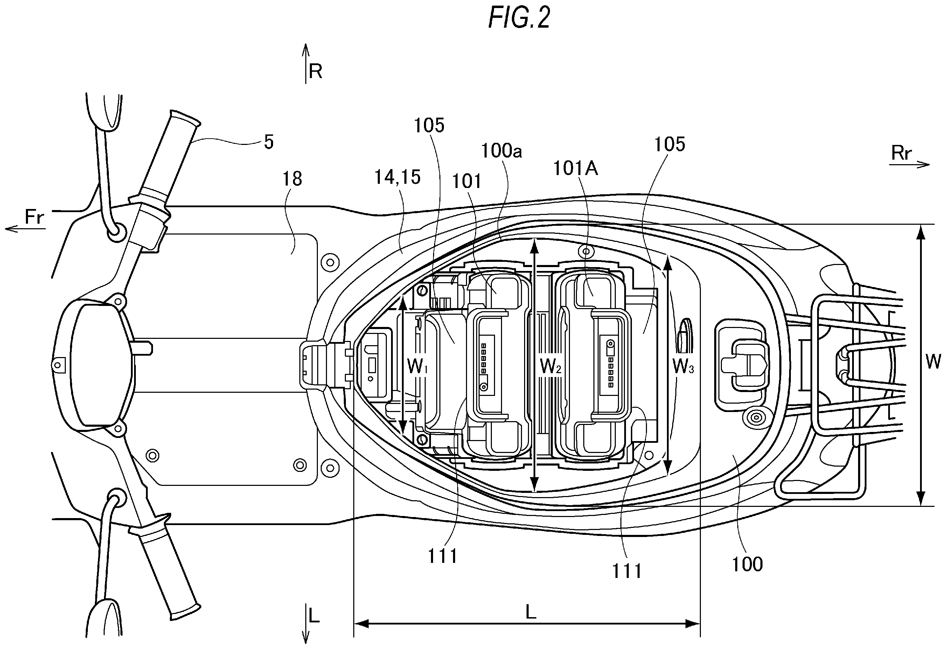

The electrical components are stored below the seating seat 17 as described above. The seating seat 17 here has a form generally long from front to rear in a plan view, and the periphery of its front end portion is formed to get narrower toward the front. Fig. 2 illustrates a state that the seating seat 17 is detached from the vehicle. A room or space below the seating seat 17 is covered with the vehicle body cover composed of the lower cover 14, the rear frame cover 15 and so on, and is set such that it is long from front to rear as a whole to follow or conform with the shape of the above-described seating seat 17, that is, generally a width W in the right and left direction is relatively small whereas a length L in the front and rear direction is relatively large. In this case, more specifically, widths W₁, W₃ near the front and rear end portions of the room or space are small, and a width W₂ near the middle portion is larger than them. The storage box 100 is also formed to be stored in the room.

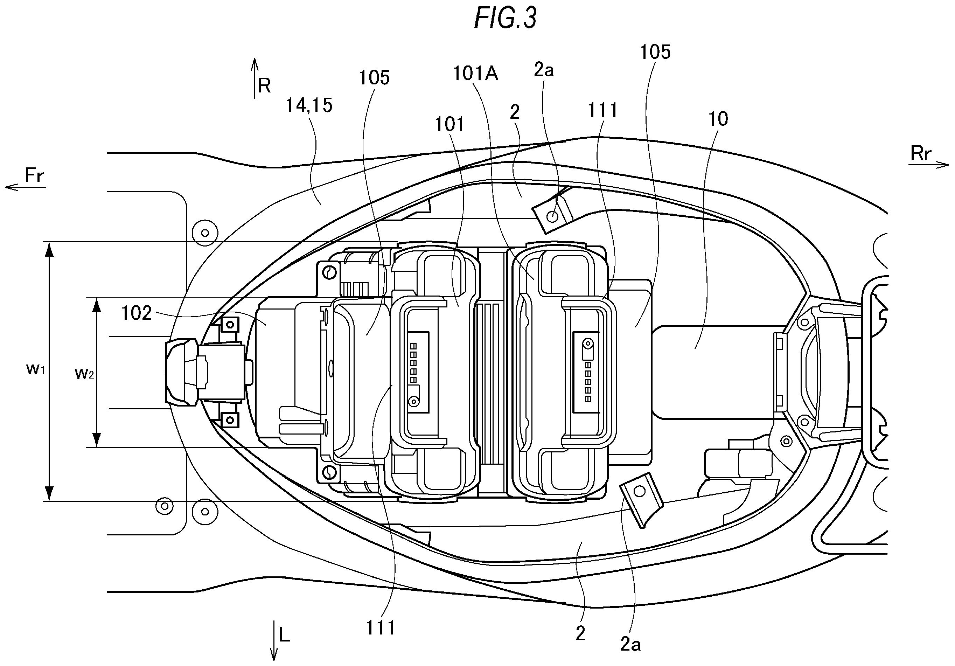

Note that Fig. 3 illustrates a state that the seating seat 17 and the storage box 100 are detached, and the right and left rear frames 2 are extended in the substantially front and rear direction below the seating seat 17 below which the storage box 100 is arranged, and the storage box 100, the rear wheel 10 and so on are arranged to be located between the right and left rear frames 2. To the rear frames 2, mounting brackets 2a are additionally provided for supporting the storage box 100, and the storage box 100 is fastened and fixed to the mounting brackets 2a using bolts and so on.

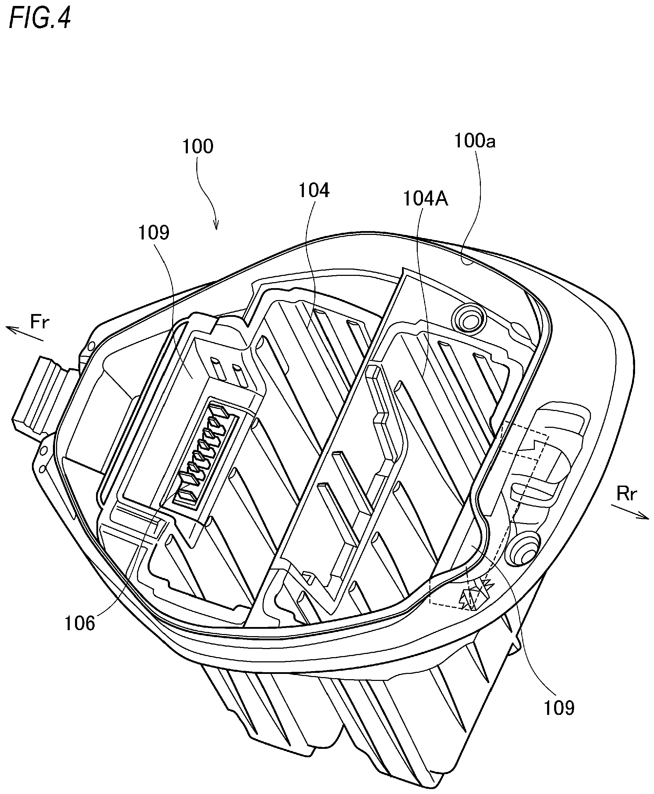

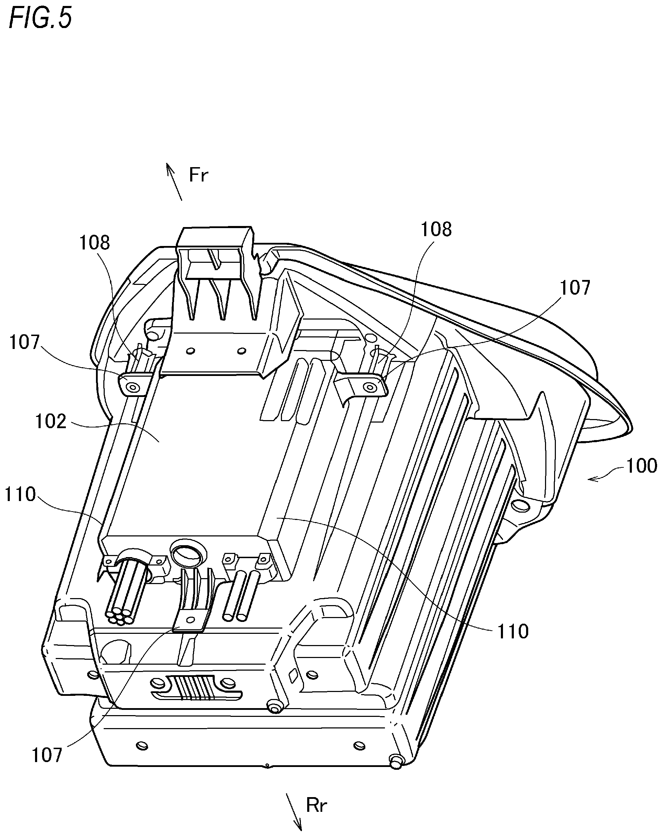

Next, Fig. 4 and Fig. 5 illustrate a concrete example of the storage box 100 in this embodiment. The storage box 100 is integrally molded of a synthetic resin material, and has an upper opening 100a to be opened and closed corresponding to a vertical pivoting operation of the seating seat 17. This upper opening 100a is formed to be generally long from front to rear in a plan view to correspond to the room below the seating seat 17, and its front end portion is formed to get narrower toward the front. Near the middle portion of the storage box 100, storage parts 104 and 104A which are deeply recessed from the upper opening 100a in a manner to be in a substantially vertical direction when they are attached to the vehicle are arranged to be adjacent to each other one behind the other. The battery 101 and the spare battery 101A are stored in the storage parts 104 and 104A respectively.

Note that the storage parts 104 and 104A are formed to be tilted such that the battery 101 and the spare battery 101A stored therein are tilted to the rear to an appropriate degree as illustrated in Fig. 1 when the storage parts 104 and 104A are mounted on the vehicle. More specifically, the direction in which the battery 101 and the spare battery 101A are inserted and removed is tilted to escape to a direction opposite to a pivotal fulcrum of the hinge mechanism at the front portion of the seating seat 17, so that the operability at insertion and removal is improved.

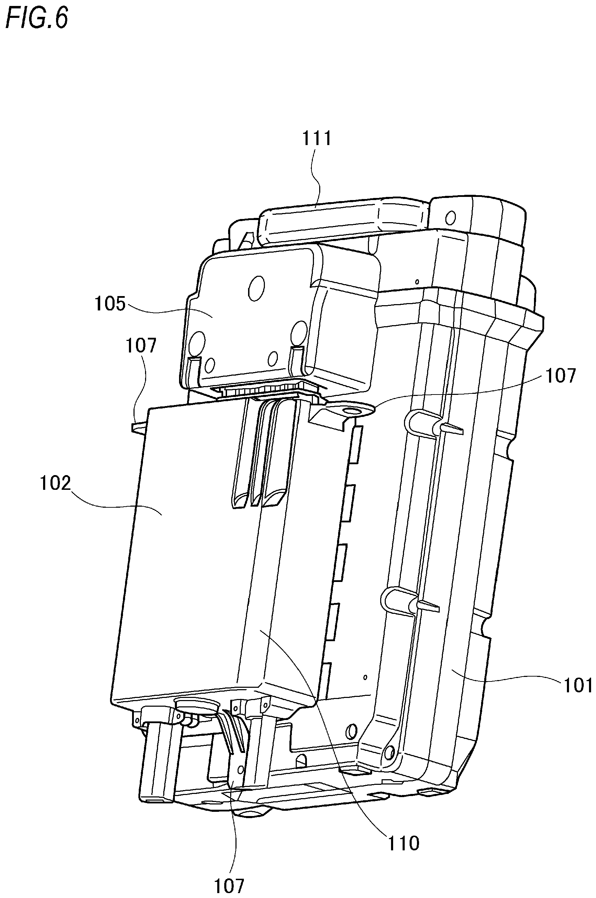

Casings of the batteries 101 and 104A are formed in a substantially box shape, for example, a box shape with a relatively small thickness, namely, a rectangular parallelepiped shape as in the example illustrated in Fig. 6. The batteries 101 and 104A are stored in the storage box 100 in a manner to be adjacent to each other in a direction of the thickness. Further, a discharge terminal part 105 is formed to project on one side surface of the box shape of the battery 101, and a plurality of connection terminals that connect with later-described connection terminals of the EV controller 102 are arranged in rows at the discharge terminal part 105.

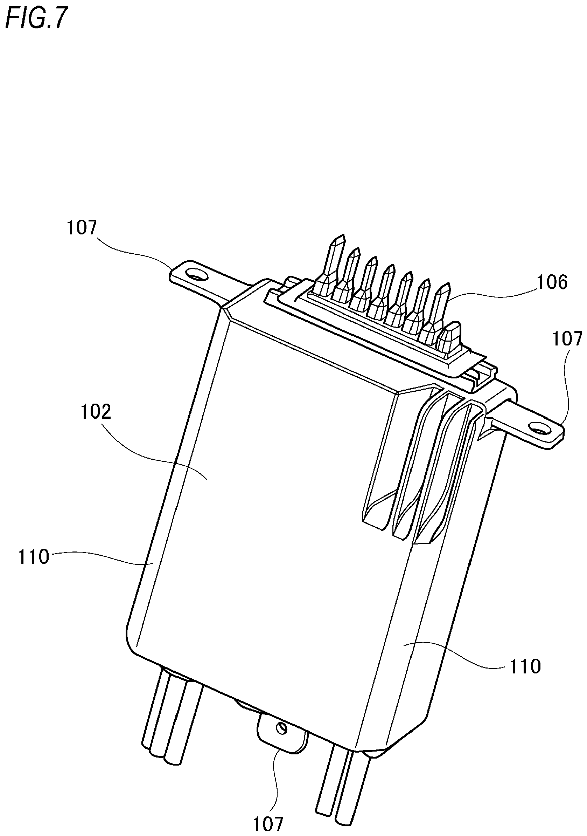

A casing of the EV controller 102 is also formed in a substantially box shape, for example, a box shape with a relatively small thickness as in the example illustrated in Fig. 7. Further, the EV controller 102 has a plurality of connection terminals 106 which connect with the connection terminals of the discharge terminal part 105 of the battery 101, arranged in rows on one end side of the box shape thereof, that is, on the upper side when it is mounted on the vehicle. The battery 101 and the EV controller 102 are alone connected such that the connection terminals of the discharge terminal part 105 of the battery 101 and the connection terminals 106 of the EV controller 102 are connected to each other as illustrated in Fig. 6.

The EV controller 102 has a plurality of mounting brackets 107 for mounting on the storage box 100 projectingly provided on both sides of the connection terminals 106 and on an opposite end side to the connection terminals 106. Then, the EV controller 102 is fastened and fixed to the storage box 100 via the mounting brackets 107 using bolts and so on. Note that the storage box 102 is provided with bosses 108 for allowing the bolts and so on to be screwed thereto (see Fig. 5).

An outer periphery of a side wall of the casing of the storage box 100, in particular, a front side wall is formed in a flat shape, and the EV controller 102 is attached such that one side surface of the casing of the EV controller 102 is applied to the front side wall as illustrated in Fig. 5. Referring to Fig. 4 here, an accommodation part 109 for accommodating the discharge terminal part 105 of the battery 101 is provided in a manner to be provided continuously to the storage part 104. At the bottom portion of the accommodation part 109, the connection terminals 106 of the EV controller 102 when it is attached to the storage box 100 (Fig. 5) are arranged in rows to face the accommodation part 109.

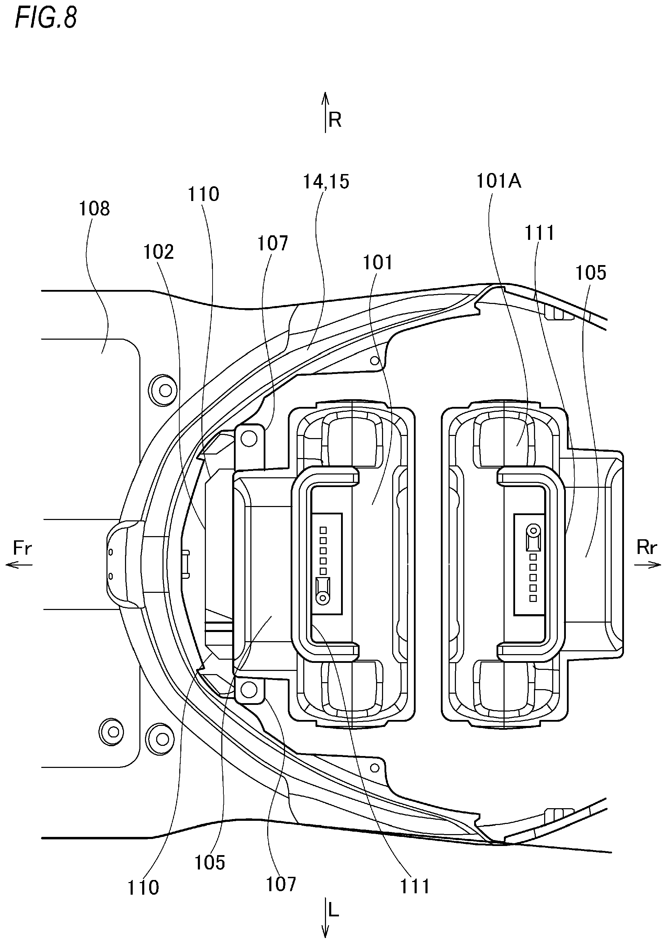

Further, chamfers 110 are formed on both right and left end portions of the other side surface (being the front side when it is mounted on the vehicle) of the casing of the EV controller 102 as illustrated in Fig. 7 or Fig. 8. Provision of the chamfers 110 enables the EV controller 102 to be arranged without interference in the room below the seating seat 17 that is formed to get narrower toward the front as described above.

The inverter 103 among the electrical components is arranged below the low step board, namely, the footrest part 18. Note that the battery 101, the EV controller 102, and the inverter 103 are connected to one another via not-illustrated electric cords to be able to give and receive signals, electric power, and so on.

In the above case, handles 111 are additionally provided at upper end portions of the battery 101 and the spare battery 101A as illustrated in Fig. 8 and so on, so that the operation of inserting to and removing from the storage parts 104 and 104A can be performed by grasping the handles 111. Note that the accommodation part 109 is arranged on the front side of the storage part 104, and the accommodation part 109 is arranged on the rear side of the storage part 104A in Fig. 8 and so on, namely, the battery 101 and the spare battery 101A are stored back to back in the storage box 100.

In the above configuration, the EV controller 102 and the inverter 103 constituting the drive control device are formed in a divided manner, and the inverter 103 on one hand is arranged below the step board. Further, as best illustrated in Fig. 5 and so on, the EV controller 102 is attached and supported on the outer periphery of the side wall of the storage box 100 made of a synthetic resin. In this case, the synthetic resin forming the storage box 100 is a material softer than iron, aluminum or an aluminum alloy, and is very excellent in vibration absorbency. As described above, high vibration proof effect can be provided for the EV controller 102 attached and supported to the storage box 100 that is integrally molded of the synthetic resin. This prevents malfunction and the like of the EV controller 102 and ensures appropriate and safe driving.

Further, the EV controller 102 integrally has the connection terminals 106 with the battery 101 provided on one end of the casing thereof and facing the accommodation part 109 of the storage box 100, whereby the battery 101 and the EV controller 102 are directly connected to each other. This eliminates the necessity of use of expensive high-voltage conductor and so on that connects them, thereby effectively reducing cost. In this case, at the time when the battery 101 is stored in the storage part 104, the discharge terminal part 105 thereof is accommodated in the accommodation part 109 while being positioned, so that the connection terminals of the battery 101 and the EV controller 102 can be easily and appropriately connected to each other.

In the storage box 100, the battery 101 and the spare battery 101A are stored one behind the other, and the EV controller 102 is attached and supported on the front side of the storage box 100. The arrangement of the electrical components enables efficient use of the room below the seating seat 17 that is long in the front and rear direction and storage of the electrical components with high space efficiency. In this case, the electrical components can be more efficiently stored in the room below the seating seat 17 such that the battery 101 and the spare battery 101A with large widths are arranged near the middle portion having a right-left width w₁ set to be large and the EV controller 102 having a right-left width w₂ smaller in width than them is arranged at a portion formed to get narrower toward the front.

Furthermore, the EV controller 102 is provided with the chamfers 110 and can be stored with high space efficiency in the room below the seating seat 17 formed to get narrower toward the front.

In the room below the seating seat 17, the EV controller 102 is arranged in addition to the battery 101 and the spare battery 101A, so that the electrical components occupying a considerable weight part are intensively arranged in this room. This arrangement provides an advantage of a so-called mass centralization, securement of excellent driving stability and so on as compared to the case where, for example, the electrical components are arranged at a portion away from the middle portion of the vehicle body, such as the swing arm 7 or the like.

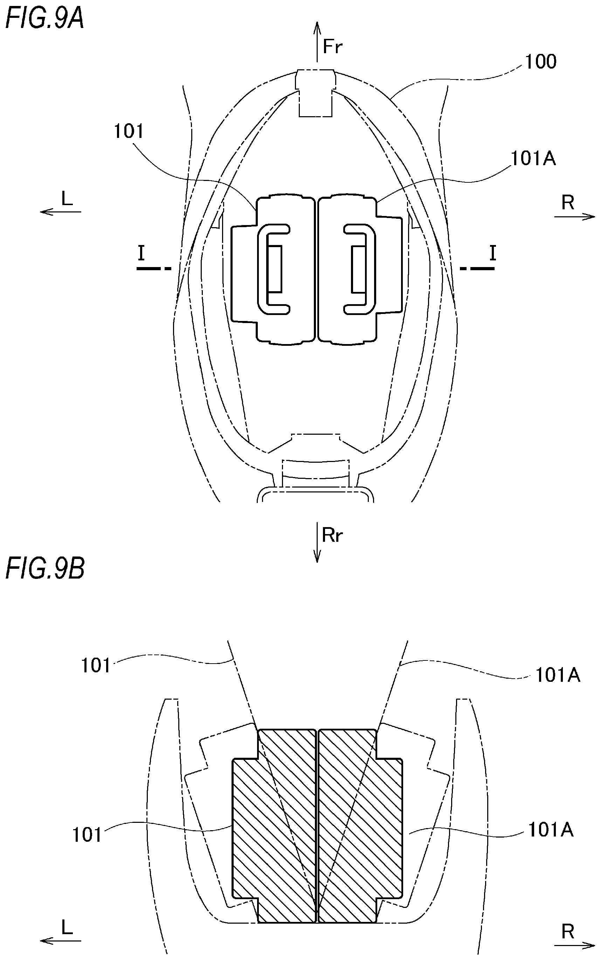

Here, Fig. 9A, Fig. 9B illustrate a modified example. This example is made such that the battery 101 and the spare battery 101A are arranged on the right and left in parallel in the room below the seating seat 17, in which arrangement they can also be intensively arranged in the limited room with high space efficiency. Further, in this case, the battery 101 and the spare battery 101A may be arranged to be appropriately tilted to the right and left into a "V" shape or the like as in Fig. 9B, and this arrangement is excellent in insertion and removal operability in positional relationship to the seating seat 17.

The present invention has been described together with various embodiments hereinabove, but the present invention is not limited only to the embodiments but may be modified within the scope of the present invention.

The example of the battery 101 (spare battery 101A), the EV controller 102, and the inverter 103 as the electrical components has been described in the above embodiment, the positional relationship between the electrical components may be changed. For example, the arrangement relationship between the EV controller 102 and the inverter 103 may be inverted. Further, the electrical components are not limited to those components but can include other electrical components, and the combination of which and where electrical components are to be arranged can be selected.

### INDUSTRIAL APPLICABILITY

According to the present invention, an electric two-wheeled vehicle can be provided which can improve and maintain the performance such as durability and arrangement property of electrical components and realize reduction in cost.

## Claims

1. An electric two-wheeled vehicle comprising:
an electric motor that drives a driving wheel (10); a battery (101) that supplies electric power to the electric motor; and a drive control device composed of an EV controller part (102) that outputs a control signal on the basis of an operation amount of an accelerator device and an inverter part (103) that increases and decreases an amount of electric power to be supplied to the electric motor on the basis of the control signal of the EV controller part (102), and
wherein a vehicle body below a seating seat (17) is covered with a body cover (14, 15), a storage box (100) integrally molded of a synthetic resin that has an upper opening (100a) to be freely opened and closed by the seating seat (17) is arranged below the seating seat (17); **characterized in that** the EV controller part (102) and the inverter part (103) of the drive control device are formed in a divided manner and that the storage box stores the battery (101) and a spare battery (101A) insertable and removable in a rearwards tilted direction, and the EV controller part (102) is attached and supported on an outer periphery of a side wall of the storage box (100).

2. The electric two-wheeled vehicle according to claim 1, wherein the EV controller part (102) integrally has a connection terminal (106) with the battery (101), the connection terminal (106) being provided on a wall surface of a casing thereof and facing an accommodation part (109) of the storage box (100), and the battery (101) and the EV controller part (102) are directly connected to each other.

3. The electric two-wheeled vehicle according to claim 1, further comprising:
a low step board made by curving downward a vehicle body in front of the seating seat (17),
wherein a room covered with a front end portion of the seating seat (17) formed to get narrower toward the front in a plan view of the vehicle and the body cover (14, 15) below the seating seat (17) is formed to get narrower toward the front in the plan view of the vehicle, and the EV controller part (102) is arranged on a front side of the storage box (100) in the room formed to get narrower toward the front.

4. The electric two-wheeled vehicle according to claim 3, wherein the inverter part (103) is arranged below the low step board.

## Patentansprüche

1. Ein elektrisches Zweiradfahrzeug, umfassend:
einen Elektromotor, der ein Antriebsrad (10) antreibt, eine Batterie (101), die den Elektromotor mit elektrischer Energie versorgt, und eine Antriebssteuervorrichtung, die aus einem EV-Steuerteil, der ein Steuersignal auf der Basis einer Betriebsgröße einer Beschleunigungsvorrichtung ausgibt, und einem Inverterteil (103) zusammengesetzt ist, der eine Menge an elektrischer Energie, die dem Elektromotor zuzuführen ist, auf der Basis des Steuersignals des EV-Steuerteils (102) erhöht und verringert, und
wobei eine Fahrzeugkarosserie unter einem Sitz (17) mit einer Karosserieabdeckung (14, 15) bedeckt ist, eine Aufbewahrungsbox (100), die integral aus einem Kunstharz geformt ist, die eine obere Öffnung (100a) zum freien Öffnen und Schließen durch den Sitz (17) aufweist, unterhalb des Sitzes (17) angeordnet ist, **dadurch gekennzeichnet, dass** der EV-Steuerteil (102) und der Inverterteil (103) der Antriebssteuervorrichtung auf eine geteilte Weise ausgebildet sind, und dass die Aufbewahrungsbox die Batterie (101) und eine Ersatzbatterie (101A) aufnimmt, die in einer rückwärtig geneigten Richtung einsetzbar und herausnehmbar ist, und der EV-Steuerteil (102) an einem Außenumfang einer Seitenwand der Aufbewahrungsbox (100) angebracht und abgestützt ist.

2. Das elektrische Zweiradfahrzeug nach Anspruch 1, wobei der EV-Steuerteil (102) integral einen Verbindungsanschluss (106) mit der Batterie (101) aufweist, wobei der Verbindungsanschluss (106) an einer Wandfläche eines Gehäuses davon vorgesehen ist und einem Aufnahmeteil (109) der Aufbewahrungsbox (100) zugewandt ist, und die Batterie (101) und der EV-Steuerteil (102) direkt miteinander verbunden sind.

3. Das elektrische Zweiradfahrzeug nach Anspruch 1, ferner umfassend:
ein niedriges Trittbrett, das durch Krümmen einer Fahrzeugkarosserie vor dem Sitz (17) nach unten hergestellt ist,
wobei ein Raum, der mit einem vorderen Endabschnitt des Sitzes (17) bedeckt ist, so ausgebildet ist, dass er in einer Draufsicht auf das Fahrzeug nach vorne hin schmaler wird, und die Karosserieabdeckung (14, 15) unter dem Sitz (17) so ausgebildet ist, dass sie in der Draufsicht auf das Fahrzeug nach vorne schmaler wird, und der EV-Steuerteil (102) auf einer Vorderseite der Aufbewahrungsbox (100) in dem Raum angeordnet ist, der ausgebildet ist, um nach vorne schmaler zu werden.

4. Das elektrische Zweiradfahrzeug nach Anspruch 3,
wobei der Inverterteil (103) unterhalb des niedrigen Trittbretts angeordnet ist.

## Revendications

1. Véhicule électrique à deux roues comprenant :
un moteur électrique qui entraîne une roue motrice (10) ; une batterie (101) qui fournit l'énergie électrique au moteur électrique ; et un dispositif de commande d'entraînement composé d'une partie de dispositif de commande EV (102) qui produit un signal de commande sur la base d'une quantité d'actionnement d'un dispositif d'accélérateur et une partie d'inverseur (103) qui augmente et diminue une quantité d'énergie électrique à fournir au moteur électrique sur la base du signal de commande de la partie de dispositif de commande EV (102), et
dans lequel une carrosserie de véhicule au-dessous d'une selle (17) est recouverte avec un couvercle de carrosserie (14, 15), une boîte de stockage (100) moulée de manière solidaire avec une résine synthétique qui a une ouverture supérieure (100a) pour être librement ouverte et fermée par la selle (17) est agencée au-dessous de la selle (17) ; **caractérisé en ce que** la partie de dispositif de commande EV (102) et la partie d'inverseur (103) du dispositif de commande d'entraînement sont formées d'une manière divisée et **en ce que** la boîte de stockage stocke la batterie (101) et une batterie de secours (101A) pouvant être insérée et retirée dans une direction inclinée vers l'arrière, et la partie de dispositif de commande EV (102) est fixée et supportée sur une périphérie externe d'une paroi latérale de la boîte de stockage (100).

2. Véhicule électrique à deux roues selon la revendication 1, dans lequel la partie de dispositif de commande EV (102) a, de manière solidaire, une borne de connexion (106) avec la batterie (101), la borne de connexion (106) étant prévue sur une paroi latérale de son carter et orientée vers une partie de logement (109) de la boîte de stockage (100), et la batterie (101) et la partie de dispositif de commande EV (102) sont directement raccordées entre elles.

3. Véhicule électrique à deux roues selon la revendication 1, comprenant en outre :
une plaque de marchepied inférieure réalisée en incurvant vers le bas une carrosserie de véhicule à l'avant de la selle (17),
dans lequel un espace recouvert avec une partie d'extrémité avant de la selle (17) formée pour se rétrécir vers l'avant sur une vue en plan du véhicule et le couvercle de carrosserie (14, 15) au-dessous de la selle (17) est formé pour se rétrécir vers l'avant sur la vue en plan du véhicule, et la partie de dispositif de commande EV (102) est agencée d'un côté avant de la boîte de stockage (100) dans l'espace formé pour se rétrécir vers l'avant.

4. Véhicule électrique à deux roues selon la revendication 3, dans lequel la partie d'inverseur (103) est agencée au-dessous de la plaque de marchepied inférieure.
